# EUROPÄISCHE PATENTANMELDUNG

(11) **EP 1 291 130 A2**
(43) Veröffentlichungstag der Anmeldung: **12.03.2003**
(21) Anmeldenummer: 02017560.0
(22) Anmeldetag: 07.08.2002
(51) Int. Cl.: B23Q 37/00, B23Q 39/02

(54) **Bearbeitungszentrum für runde Werkstücke**

(30) Priorität: 11.09.2001 DE 10144679
(71) Anmelder: Waldrich Siegen Werkzeugmaschinen GmbH, 57299 Burbach (DE)
(72) Erfinder: Binder, Rolf, 41238 Mönchengladbach (DE); Dürler, Fritz, 57080 Siegen-Eisern (DE)
(74) Vertreter: Schwarz, Thomas, Dipl.-Ing.

(57) **Zusammenfassung**

Die Erfindung betrifft ein Bearbeitungszentrum für runde Werkstücke mit einem Maschinenbett (1), einer in einem seitlichen Spindelstock (2) am Maschinenbett (1) drehbar gelagerten und durch einen Antrieb (5, 6, 7) drehangetriebenen horizontalen Hauptantriebsspindel (3) mit einer Werkstückspannvorrichtung (4), einem auf dem Maschinenbett (1) angeordneten Reitstock (12) und einem auf dem Maschinenbett (1) verfahrbar angeordneten Support (17). Der Support (17) weist einen auf dem Maschinenbett (1) verfahrbaren Bettschlitten (26) und einen an diesem schräg angeordneten oberen Spindelstock (30) mit einem in dessen Längsachse verfahrbaren Träger (32) auf, in den austauschbare Bearbeitungseinheiten (18, 19, 20, 21, 22, 23, 24) zur Durchführung unterschiedlicher Bearbeitungstechnologien einsetzbar sind.

## Beschreibung

Die Erfindung betrifft ein Bearbeitungszentrum für runde Werkstücke gemäß dem Oberbegriff des Anspruchs 1.

Zur Herstellung im wesentlichen rotationssymmetrischer Werkstücke werden in der Regel Drehmaschinen eingesetzt, bei denen die rotatorische Hauptschnittbewegung vom Werkstück und die Vorschubbewegung vom Werkzeug durchgeführt wird und/oder umgekehrt. Besonders bei den numerisch gesteuerten Drehautomaten gelangen vielfach sogenannte Schrägbettmaschinen zum Einsatz, bei denen der die Werkzeuge tragende Support an einer schrägen Führungsfläche des Maschinenbetts angeordnet ist. Zur Durchführung mehrerer Bearbeitungsoperationen mit unterschiedlichen Werkzeugen sind an dem Support z.B. als Stern- , Scheibenrevolver oder Bohr- und Fräsaggregat ausgeführte Werkzeugträgersysteme vorgesehen. In derartige Trägersysteme können auch kleinere Bearbeitungseinheiten eingesetzt werden, mit denen bestimmte Fräs- oder Bohrbearbeitungen möglich sind. Allerdings sind die Bewegungsmöglichkeiten derartiger Werkzeugträgersysteme aufgrund der Kollisionsgefahr mit den Werkstücken beschränkt. Durch die Störkonturen der Bearbeitungseinheiten können daher eine Reihe von Bearbeitungsoperationen entweder gar nicht oder nur mit erheblichem Aufwand durchgeführt werden. Viele Konzepte zur Erweiterung des Bearbeitungsspektrums stellen daher Kompromißlösungen dar, die nur auf ein spezielles Einsatzgebiet abgestimmt sind.

Aufgabe der Erfindung ist es, ein Bearbeitungszentrum der eingangs genannten Art zu schaffen, das eine Komplettbearbeitung von runden Werkstücken in einer Aufspannung ermöglicht.

Diese Aufgabe wird durch ein Bearbeitungszentrum mit den Merkmalen des Anspruchs 1 gelöst. Zweckmäßige Ausgestaltungen und vorteilhafte Weiterbildungen der Erfindung sind in den Unteransprüchen angegeben.

Das erfindungsgemäße Bearbeitungszentrum zeichnet sich durch ein breites Einsatzspektrum bei gleichzeitig hoher statischer und dynamischer Steifigkeit aus. Neben der klassischen Drehbearbeitung können auch eine Vielzahl weiterer Bearbeitungstechnologien, wie Fräsen, Bohren, Drehfräsen, 5/6-Achsbearbeitung, Gewindefräsen, Tiefbohren, Verzahnen und insbesondere auch Schleifen mit hoher Genauigkeit in einer Werkstückaufspannung durchgeführt werden. Dadurch wird eine Komplettbearbeitung auch größerer und komplex geformter runder und asymmetrischer Werkstücke ohne Umspannung möglich. Die einfache Austauschbarkeit der unterschiedlichen Bearbeitungseinheiten gewährleistet eine hohe Produktivität und optimale Wirtschaftlichkeit. Der modulare Aufbau ermöglicht außerdem eine nachträgliche Erweiterung durch Adaption entsprechender Bearbeitungseinheiten. Dadurch kann eine ursprünglich für andere Bearbeitungsaufgaben vorgesehene Maschine mit neuen Technologien erweitert werden.

Ein weiterer wesentlicher Vorteil des erfindungsgemäßen Maschinenkonzepts besteht in der optimalen Späneabfuhr. Die bei der Bearbeitung anfallenden Späne können frei nach unten fallen und bleiben nicht auf verschiebbaren Supportteilen oder entsprechenden Abdeckungen liegen. Zur optimale Abfuhr der nach unten fallenden Späne aus der Maschine ist in einer vorteilhaften Ausführung ein automatischer Späneförderer im Maschinenbett integriert.

Der die unterschiedlichen Bearbeitungseinheiten aufnehmende Träger ist in einer besonders zweckmäßigen Ausführung in einer Art pinolenförmigen Stempel ausgeführt. Er befindet sich in einer schräg angeordneten Spindelstockeinheit, die wiederum auf einer schlittenförmigen, verfahrbaren Trägereinheit auf dem Bett verfahren werden kann. Der Stempel ist im oberen Spindelstock in Richtung des Werkzeugs schräg von oben nach unten, nc-gesteuert, verfahrbar. Dadurch wird eine optimale Arbeitsraumfreiheit am Bearbeitungsmodul gewährleistet und die Kollisionsgefahr verringert. In dem pinolenartigen Stempel ist eine motorisch angetriebene Antriebsspindel angeordnet. Dadurch können die unterschiedlichen Bearbeitungseinheiten durch eine zentrale Einheit angetrieben werden, sofern sie keinen eigenständigen Antrieb (Motorspindeln) besitzen.

In einer besonders soliden und formsteifen Ausgestaltung ist das Maschinenbett als Stufenbett mit einem vorderen Bettteil und einem erhöhten hinteren Bettteil ausgeführt. Dadurch können auch große und schwere Bauteile mit einer hohen Genauigkeit bearbeitet werden.

Der Antrieb der Hauptspindel erfolgt in einer weiteren zweckmäßigen Ausführung über einen oder zwei parallele Antriebsmotore. Dadurch ist eine optimale Anpassung des Antriebs an die unterschiedlichen Leistungsanforderungen möglich. Der Antrieb ist als Dreh-, Positionier- und Rundfräsantrieb ausgeführt.

In einer weiteren Ausgestaltung ist an dem vorderen Bettteil, am Ende des Maschinenbetts, ein Magazin für die zum Einsatz gelangenden Bearbeitungseinheiten angeordnet. Dadurch können die Bearbeitungseinheiten durch einfache Verfahrbewegungen des Supports im Pick-up-Verfahren ausgetauscht werden.

Zum schnellen und effizienten automatischen Austauschs der Werkzeuge ist außerdem am Ende der Maschine ein Werkzeugmagazin mit einem zugehörigen automatischen Werkzeugwechsler vorgesehen.

Weitere Besonderheiten und Vorzüge der Erfindung ergeben sich aus der folgenden Beschreibung eines bevorzugten Ausführungsbeispiels anhand der Zeichnung. Es zeigt:
- **Figur 1**: eine schematische Gesamtdarstellung eines erfindungsgemäßen Bearbeitungszentrums für runde Werkstücke in einer Perspektive;
- **Figur 2**: den Grundaufbau des in Figur 1 gezeigten Bearbeitungszentrums in einer Vorderansicht, Seitenansicht und Draufsicht und
- **Figur 3**: verschiedene Bearbeitungseinheiten zur Durchführung unterschiedlicher Bearbeitungstechnologien an einem runden Werkstück.

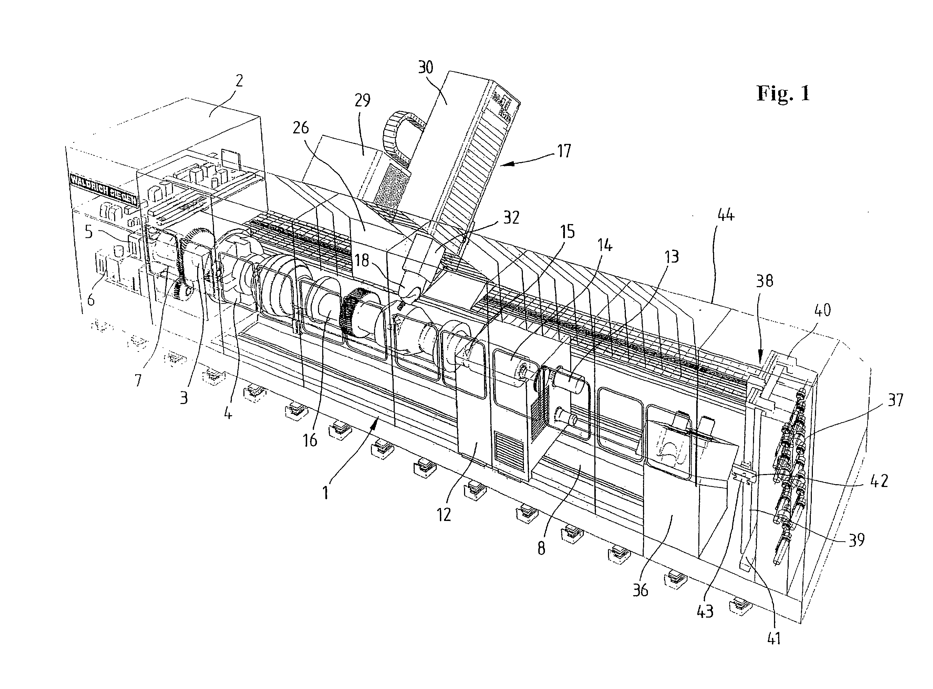

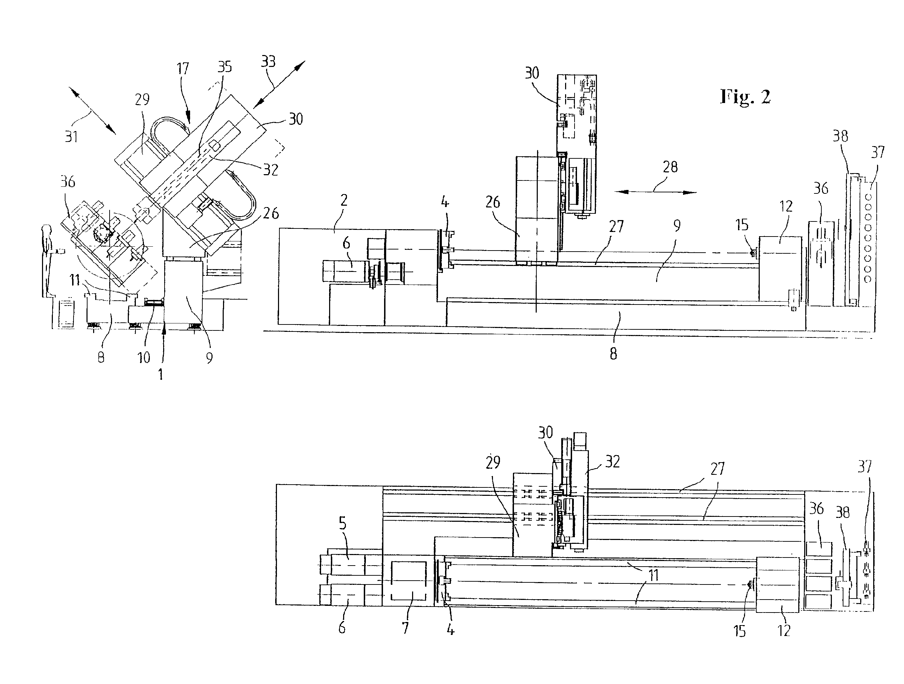

Das in den Figuren 1 und 2 schematisch dargestellte Bearbeitungszentrum für runde Werkstücke enthält ein Maschinenbett 1 und einen Spindelstock 2, in dem eine horizontale Werkstückantriebsspindel 3 mit einer als Spannfutter ausgeführten stirnseitigen Werkstückspannvorrichtung 4 drehgelagert angeordnet ist. Der Antrieb der Werkstückantriebsspindel 3 erfolgt durch ein oder zwei parallele Antriebsmotoren 5 und 6 über je ein schaltbares zweistufiges Planetengetriebe 7, das für eine hohe Betriebssicherheit und eine optimale Laufruhe sorgt. Durch Konfiguration einer Maschine mit ein oder zwei der als Drehstrommotoren ausgeführten Antriebsmotoren 5 und 6 kann der Antrieb in optimaler Weise an die Maschine angepaßt werden. Der Antrieb ist derart ausgelegt, daß er sowohl als Drehantrieb als auch als Positionier- und Rundfräsantrieb genutzt werden kann.

Wie besonders aus Figur 2 hervorgeht, ist das Maschinenbett 1 als einteiliges Stufenbett mit einem vorderen Bettteil 8 und einem erhöhten hinteren Bettteil 9 ausgeführt. Zwischen dem vorderen Bettteil 8 und dem hinteren Bettteil 9 ist im Maschinenbett 1 ein Späneförderer 10 zur automatischen Abfuhr der bei der Bearbeitung anfallenden Späne integriert. Der vordere Bettteil 8 enthält zwei parallele Führungsbahnen 11, auf denen ein Reitstock 12 in einer horizontalen Längsachse motorisch verstellbar geführt ist. In dem Reitstockgehäuse ist eine über einen Motor 13 in Längsrichtung verstellbare Pinole 14 angeordnet. In der Pinole befindet sich eine Achse, die mit Werkstückdrehzahl umläuft und in die eine Reitstockspitze 15 eingesetzt ist. Zwischen dem Spannfutter 4 und der Reitstockspitze 15 wird ein zu bearbeitendes Werkstück 16 gespannt. Die motorische Verstellung des Reitstocks 12 und der Pinole 14 garantieren eine schnelle und sicherere Werkstückaufnahme. Durch die Pinolenausführung ist ein feinfühliges Anstellen des Reitstocks an das Werkstück möglich, wodurch axial weniger steife Werkstücke laufgenau gespannt werden können. Zusätzlich ist in der Pinole ein Federpaket integriert, das einen Längenausgleich des Werkstückes durch z.B. temperaturbedingte Längenänderungen erlaubt.

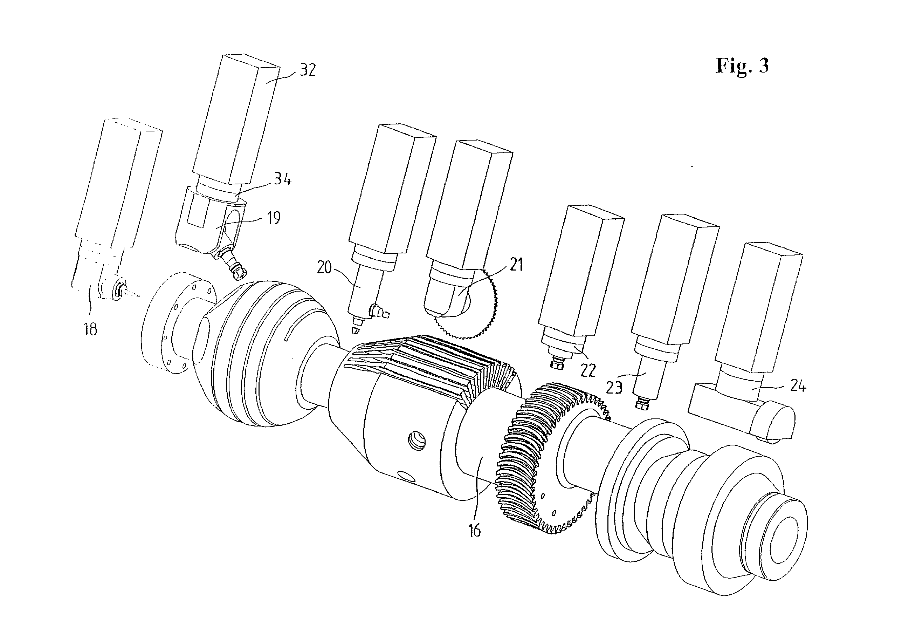

Auf dem hinteren Bettteil 9 ist ein Support 17 mit Spindelstock für die Aufnahme einer Vielzahl unterschiedlicher - in Figur 3 dargestellter - Bearbeitungseinheiten 18 bis 24 angeordnet Mit Hilfe dieser Bearbeitungseinheiten können verschiedene Bearbeitungstechnologien, wie z.B. Drehen, Fräsen, Drehfräsen, Bohren, 5/6-Achs-Bearbeitung, Gewindefräsen, Tiefbohren, Verzahnen und sogar Schleifen durchgeführt werden.

Wie besonders aus Figur 2 hervorgeht, enthält der Support 17 einen Bettschlitten 26, der über Führungen 27 auf der Oberseite des hinteren Bettteils 9 in einer zur Längsachse des Werkstücks parallelen ersten Linearachse 28 (Z-Achse) motorisch verfahrbar angeordnet ist. An der Seite eines unter 45° nach nach oben abgeköpften oberen Teils 29 des Bettschlittens 26 ist ein oberer Spindelstock 30 in einer unter 45° zur Horizontalen geneigten zweiten Linearachse 31 (Y-Achse) motorisch verfahrbar angeordnet. In dem Spindelstock 30 ist ein in Art eines Stempels ausgeführter Träger 32 in einer zu den beiden Linearachsen 28 und 31 senkrechten dritten Linearachse 33 (X-Achse) quer zum Werkstück verfahrbar geführt. An dem vorderen Ende des Trägers 32 ist eine Schnittstelle 34 vorgesehen, die nicht nur die sichere Halterung der unterschiedlichen Bearbeitungseinheiten, sondern auch deren optimale Versorgung mit unterschiedlichen Medien gewährleistet. In dem rechteckigen Träger 32 ist eine durch einen Motor drehangetriebene Spindel 35 angeordnet, über die der Antrieb der Bearbeitungseinheiten erfolgt, sofern sie keinen eigenen Antrieb besitzen.

In Figur 3 sind einige Beispiele für Bearbeitungseinheiten mit den zugehörigen Bearbeitungsbeispielen auf einem Drehteil 16 gezeigt. Auf der linken Seite ist eine als Winkelkopf ausgeführte Bohr- oder Fräseinheit 18 gezeigt. Hiermit können z.B. die stirnseitigen Bohrungen in dem Drehteil 16 hergestellt werden. Neben der Bohr- und Fräseinheit 18 ist eine Bearbeitungseinheit 19 zur Durchführung einer 5/6-Achsen-Bearbeitung dargestellt. Diese enthält ein Schwenkteil, das um eine zusätzliche Drehachse schwenkbar ist und in einer gabelförmigen Halterung aufgenommen ist. Mit dieser weiteren Achse können auch komplexe Bahnen an gekrümmten Flächen hergestellt werden. Zusammen mit einer weiteren Drehachse um die Längsachse des stempelförmigen Trägers können letztendlich unter beliebigen Winkeln im Raum stehende Flächen bearbeitet werden. Daneben ist eine Dreheinheit 20 mit einer stimseitigen und seitlichen Halterung zur Aufnahme von Werkzeugen aus modularen Werkzeugsystemen dargestellt. Mit dieser Dreheinheit 20 können z.B. Längs-, Plan- und Konturdrehoperationen durchgeführt werden. Neben der Dreheinheit 20 ist eine Fräseinheit 21 mit einem Scheibenfräser gezeigt. Hiermit können z.B. die gezeigten Schlitze an der Außenseite des Drehteils 16 hergestellt werden. Weiter sind eine gerade Fräseinheit 22 und eine mit Motorspindel versehene Fräseinheit 23 dargestellt. Durch gesteuerte Drehung der Hauptantriebsspindel können so z.B. auch komplexe Verzahnungen gefräst werden. Die Bearbeitungseinheiten können auch schnelllaufende Vorsatzspindeln beinhalten, die eine Hochgeschwindigkeitsbearbeitung ermöglichen. Auf der rechten Seite ist außerdem eine Schleifeinheit gezeigt, mit der im Gegensatz zu den herkömmlichen Bearbeitungszentren auch Schleifbearbeitungen durchgeführt werden können.

Zum automatischen Wechsel der zum Einsatz kommenden Bearbeitungseinheiten ist am Ende des vorderen Bettteils 8 ein auch in der Seitenansicht der Figur 2 dargestelltes Magazin 36 zur Bereitstellung der Bearbeitungseinheiten angeordnet. In diesem Magazin 36 sind die Bearbeitungeinheiten unter 45° liegend derart angeordnet, daß sie durch einfache Verfahrbewegungen des Supports 17 von dem Träger 32 einfach aufgenommen bzw. von diesem entsprechend abgelegt werden können. Bei der gezeigten Ausführung ist das modular erweiterbare Magazin 36 stationär am Ende des Maschinenbetts 1 angeordnet. Es könnte aber auch verschiebbar auf den Führungsbahnen 11 des vorderen Bettteils 8 angeordnet sein. Dadurch kann der vom Bettschlitten 26 zur Auswechslung zurückzulegende Verfahrweg verkürzt werden, wenn vornehmlich kürzere Werkstücke bearbeitet werden.

Zum schnellen und effizienten Austausch der Werkzeuge ist neben dem Magazin 36 für die Bearbeitungseinheiten eine Einrichtung zum automatischen Werkzeugwechsel vorgesehen. Diese Einrichtung besteht aus einem Werkzeugmagazin 37 und einem Werkzeugwechsler 38 zum Transport der Werkstücke zwischen dem Werkzeugmagazin 37 und einer im Träger 32 angeordneten Bearbeitungseinheit 18. Der Werkzeugwechsler 38 enthält eine vertikalen Trägerstütze 39, die über obere und untere Führungsschienen 40 bzw. 41 quer zur Längsachse des Maschinenbetts 1 verfahrbar angeordnet ist. An der Trägerstütze 39 ist ein Schlitten 42 in der Vertikalachse verfahrbar geführt. Der Schlitten 42 trägt den als Doppelgreifer ausgeführten Werkzeuggreifer 43, durch den ein in der Bearbeitungseinheit 18 gespanntes Werkzeug gegen ein im Werkzeugmagazin 37 befindliches Werkzeug ausgetauscht werden kann. Das Werkzeugmagazin 37 ist als Regalmagazin ausgeführt, das in Verlängerung des Maschinenbetts 1 am Ende des Bearbeitungszentrums platzsparend angeordnet und beliebig erweiterbar ist. Auch die Werkzeugwechseleinrichtung könnte jedoch auf den Führungsbahnen 11 des vorderen Bettteils 8 verfahrbar angeordnet sein.

Zur Vermeidung von Durchbiegungen besonders an langen und schlanken Werkstücken können auf dem vorderen Bettteil 8 auch Lünetten zur Abstützung angeordnet werden. Eine besonders hohe Genauigkeit läßt sich durch NC-gesteuerte Lünetten erreichen, die in allen Achsen gesteuert verstellbar sind. Die Lünetten können in einer Basisversion als Rollenlünette oder für bestimmte Aufgaben als hydrodynamische oder hydrostatische Lünette mit synchron oder individuell anstellbaren Auflagen ausgeführt sein.

Durch eine in Figur 1 schematisch dargestellte Arbeitsraumkapselung 44 wird der Arbeitsraum derart abgedeckt, daß sich sämtliche Supportführungen außerhalb des Arbeitsbereichs befinden. Dadurch können diese Führungen vor Verschmutzung geschützt und deren Verschleiß kann minimiert werden.

## Patentansprüche

1. Bearbeitungszentrum für runde Werkstücke mit
einem Maschinenbett (1),
einer in einem seitlichen Spindelstock (2) am Maschinenbett (1) drehbar gelagerten und durch einen Antrieb (5, 6, 7) drehangetriebenen horizontalen Hauptantriebsspindel (3) mit einer Werkstückspannvorrichtung (4),
einem auf dem Maschinenbett (1) angeordneten Reitstock (12) und
einem auf dem Maschinenbett (1) verfahrbar angeordneten Support (17),
**dadurch gekennzeichnet,**
**daß** der Support (17) einen auf dem Maschinenbett (1) verfahrbaren Bettschlitten (26) und einen an diesem schräg angeordneten oberen Spindelstock (30) mit einem in dessen Längsachse verfahrbaren Träger (32) aufweist, in den austauschbare Bearbeitungseinheiten (18, 19, 20, 21, 22, 23, 24) zur Durchführung unterschiedlicher Bearbeitungstechnologien einsetzbar sind.

2. Bearbeitungszentrum nach Anspruch 1, **dadurch gekennzeichnet, daß** der obere Spindelstock (30) an der Seite des nach oben abgeschrägten und in einer ersten Linearachse (28) verfahrbaren Bettschlittens (26) in einer unter einem Winkel zur Horizontalen verlaufenden zweiten Linearachse (31) verfahrbar angeordnet ist.

3. Bearbeitungszentrum nach Anspruch 2, **dadurch gekennzeichnet, daß** der Träger (32) in einer zu der ersten und zweiten Linearachse (28, 31) senkrechten dritten Linearachse (33) motorisch verfahrbar im oberen Spindelstock (30) angeordnet ist.

4. Bearbeitungszentrum nach einem der Ansprüche 1 bis 3, **dadurch gekennzeichnet, daß** in dem Träger (32) eine motorisch drehangetriebene Spindel (35) zum Antrieb der ohne eigenen Antrieb ausgeführten Bearbeitungseinheiten (18, 19, 20, 21, 22, 23, 24) angeordnet ist.

5. Bearbeitungszentrum nach einem der Ansprüche 1 bis 4, **dadurch gekennzeichnet, daß** der Träger (32) in Art eines pinolenförmigen Stempels ausgebildet ist.

6. Bearbeitungszentrum nach einem der Ansprüche 1 bis 5, **dadurch gekennzeichnet, daß** das einteilige Maschinenbett (1) ein Stufenbett mit einem vorderen Bettteil (8) und einem erhöhten hinteren waagrechten Bettteil (9) ist.

7. Bearbeitungszentrum nach Anspruch 6, **dadurch gekennzeichnet, daß** der Bettschlitten (26) auf dem erhöhten hinteren Bettkörper (9) des Maschinenbetts (1) verfahrbar angeordnet ist.

8. Bearbeitungszentrum nach einem der Ansprüche 1 bis 7, **dadurch gekennzeichnet, daß** in das Maschinenbett (1) ein Späneförderer (10) zum automatischen Abtransport der bei der Bearbeitung anfallenden Späne integriert ist.

9. Bearbeitungszentrum nach einem der Ansprüche 1 bis 8, **dadurch gekennzeichnet, daß** der Antrieb (5, 6, 7) der Hauptantriebsspindel (3) als Dreh-, Positionier- und CNC-geregelter Rundfräsantrieb ausgeführt ist.

10. Bearbeitungszentrum nach einem der Ansprüche 1 bis 9, **dadurch gekennzeichnet, daß** der Antrieb (5, 6, 7) der Hauptantriebsspindel (3) ein oder zwei parallele Antriebsmotoren (5, 6) und je Motor ein schaltbares Getriebe (7) enthält.

11. Bearbeitungszentrum nach einem der Ansprüche 1 bis 10, **dadurch gekennzeichnet, daß** die Bearbeitungseinheiten (18, 19, 20, 21, 22, 23, 24) durch Verfahrbewegungen des Supports (17) im Pick-up-Prinzip austauschbar sind.

12. Bearbeitungszentrum nach einem der Ansprüche 1 bis 11, **dadurch gekennzeichnet, daß** am reitstockseitigen Ende des Maschinenbetts (1) ein Magazin (36) zur Speicherung mehrerer Bearbeitungseinheiten (18, 19, 20, 21, 22, 23, 24) angeordnet ist.

13. Bearbeitungszentrum nach einem der Ansprüche 1 bis 12, **dadurch gekennzeichnet, daß** am reitstockseitigen Ende des Maschinenbetts (1) eine Einrichtung (37, 38) zum automatischen Werkzeugwechsel angeordnet ist.

14. Bearbeitungszentrum nach Anspruch 13, **dadurch gekennzeichnet, daß** die Einrichtung zum automatischen Werkzeugwechsel (37, 38) ein Werkzeugmagazin (37) und einem automatischen Werkzeugwechsler (38) enthält.

15. Bearbeitungszentrum einem der Ansprüche 1 bis 14, **dadurch gekennzeichnet, daß** sie eine Arbeitsraumkapselung (44) enthält, durch welche die Führungen, Werkzeugwechsler, Pick-up-Station und Spindelstock vom Arbeitsraum getrennt sind.
